# EUROPÄISCHE PATENTSCHRIFT

(11) **EP 1 157 876 B1**
(45) Veröffentlichungstag und Bekanntmachung des Hinweises auf die Patenterteilung: **23.01.2008**
(21) Anmeldenummer: 01106614.9
(22) Anmeldetag: 16.03.2001
(51) Int. Cl.: B60L 5/26

(54) **Stromabnehmer mit Windleitprofil**
Current collector with air foil
Collecteur de courant avec profil aérodynamique

(30) Priorität: 24.05.2000 DE 10025816
(43) Veröffentlichungstag der Anmeldung: 28.11.2001
(73) Patentinhaber: Stemmann-Technik GmbH, 48465 Schüttorf (DE)
(72) Erfinder: Algermissen, Gerhard, Dr. Ing., 71063 Sindelfingen (DE); Jäeger, Karl, Dipl.-Ing., 88090 Immenstaad (DE)
(74) Vertreter: Ksoll, Peter

(56) Entgegenhaltungen:
- DE-A- 19 652 367
- GB-A- 2 165 806
- JP-A- 6 311 605
- JP-A- 2000 125 403
- US-A- 3 823 278

## Beschreibung

Die Erfindung bezieht sich auf einen Stromabnehmer gemäß dem Oberbegriff des Anspruchs 1.

Stromabnehmer elektrisch betriebener Fahrzeuge müssen zahlreichen Lastenheft-Anforderungen der jeweiligen Fahrzeug-Betreiber genügen. Insbesondere wird gefordert, daß die mittlere Kontaktkraft, mit der die Schleifleisten an den Fahrdraht gepreßt werden, für alle betrieblich vorgesehenen Fahrgeschwindigkeiten einen bestimmten Grenzwert bei vorgegebener Standardabweichung nicht überschreitet. Ferner wird gefordert, daß die auftretenden Kraftspitzen zur Verminderung des Verschleißes der Schleifstücke einen bestimmten oberen Grenzwert nicht überschreiten und einen unteren Grenzwert nicht unterschreiten, um die Ausbildung von Lichtbögen zu verhindern. Die Kontaktkraft hängt neben der Hubkraft, mit der das die Schleifstücke tragende Gestell des Stromabnehmers vom Fahrzeugdach zum Fahrdraht hoch gefahren wird, und den Federkräften des Gestells auch von den am Stromabnehmer angreifenden, fahrgeschwindigkeits- und zum Teil auch fahrtrichtungsabhängigen aerodynamischen Kräften ab. Dabei führen die insbesondere bei Stromabnehmern für Hochgeschwindigkeits-Schienenfahrzeuge auftretenden hohen Auftriebskräfte zu einem besonders hohen Verschleiß am Fahrdraht und an den Schleifstücken. Desweiteren wird der Fahrdraht durch die hohen Auftriebskräfte unzulässig weit angehoben, was ein sicherheitsrelevantes Problem darstellt.

Aus der DE-AS 1 272 958 ist ein Stromabnehmer mit einem einzigen Schleifstück und Leitflächen zur Erzielung eines Auftriebes durch den Fahrwind im Sinne einer Verstärkung des Anpreßdruckes des Schleifstückes am Fahrdraht bekannt. Die Leitflächen sind auswechselbar über Abstandsstücke an einer Klemmfassung gehaltert und in ihrem Anstellwinkel verstellbar. In einer Ausführungsform ist je eine Leitfläche, in Fahrtrichtung gesehen, vor und hinter der Klemmfassung angeordnet, deren Anstellwinkel unterschiedlich gewählt sind, im Sinn einer Vergrößerung der Auftriebskräfte. In einer anderen Ausführungsform ist die Leitfläche über Stege unterhalb des Schleifstückes gehalten und hat zur Verringerung der fahrdraht-parallelen Kraftkomponente des Auftriebes ein Strömungsprofil ähnlich einer Flugzeug-Tragfläche. Ein solcher Stromabnehmer hat den Nachteil, daß er in der einen Ausführungsform in beiden Fahrtrichtungen Auftrieb erfährt, und in der anderen Ausführungsform nur für eine Fahrtrichtung vorgesehen ist und da ebenfalls Auftrieb erfährt, was bei hohen Fahrgeschwindigkeiten einen unerwünschten hohen Verschleiß des Schleifstückes mit sich bringt.

Die DE-OS 2 363 683 offenbart einen aerodynamisch einstellbaren Stromabnehmer mit einem Kollektorschuh, der zur Aufrechterhaltung eines Reibkontaktes mit einem Oberleitungsdraht federnd auf einem Rahmen gehaltert ist. Am Stromabnehmer ist wenigstens ein einstellbares Flügelelement befestigt zur Ausbildung eines aerodynamischen Auftriebes über einen Bereich positiver und negativer Werte, wenn sich der Stromabnehmer bei verschiedenen Geschwindigkeiten in einer gegebenen Richtung an dem Draht entlang bewegt. Außerdem sind Mittel zum Abtasten der Kraft zwischen dem Sammelschuh und dem Oberleitungsdraht sowie Mittel zur Einstellung des Flügelelementes in Abhängigkeit von den Abtastmitteln zur Bewegung des Kollektorschuhs vorgesehen, so daß eine im wesentlichen konstante Kraft zwischen dem Kollektorschuh und dem Oberleitungsdraht aufrecht erhaltbar ist. Bei einem solchen Stromabnehmer kann die Anhebung des Kollektorschuhs zwar in Relation zur Fahrzeuggeschwindigkeit und -richtung selektiv für positive oder negative Werte variieren, jedoch nur durch den Einsatz aufwendiger Abtast- und Einstellmittel.

Die DE-G 89 12 458 zeigt eine aerodynamische Auftriebshilfe für Stromabnehmer mit einer Wippe, die wenigstens aus zwei Haltern, einer Querachse und an den Haltern befestigten Schleifleisten besteht. An den Haltern sind vor oder hinter der Querachse, die die Halter verbindet, Windleitbleche angeordnet, die in der einen Fahrtrichtung Auftrieb und in der entgegengesetzten Fahrtrichtung Abtrieb erzeugen. Werden in den beiden Fahrtrichtungen betragsmäßig unterschiedliche Kräfte benötigt, so kann mittels einer Staukante am Windleitblech die Korrekturkraft in einer Richtung verstärkt werden, wobei sich in der anderen Richtung nur erhöhte Widerstände ergeben. Das Windleitblech ist unter einem Anstellwinkel von maximal 10° fest in dieser Stellung an den Haltern der Stromabnehmer-Wippe befestigt. Eine solche Auftriebshilfe hat den Nachteil, dass nur in einer Fahrtrichtung Abtrieb erzeugt werden kann.

Aus der DE 196 52 367 A1 ist ein Stromabnehmer für ein elektrisch in zwei entgegengesetzte Fahrtrichtungen betreibbares Fahrzeug bekannt. Der Stromabnehmer weist ein federndes Gestell zur Erzielung einer Kontaktkraft zwischen einer Schleifleiste des Stromabnehmers und einem Fahrdraht auf. Des weiteren weist dieser bekannte Stromabnehmer ein Windleitprofil (Windblech) zur Beeinflussung der Kontaktkraft durch den Fahrtwind auf. Das Windleitprofil ist als plattenähnliches Bauelement ausgebildet und an einem Scheitelrohr des Stromabnehmers drehbar befestigt. Sowohl die Unterseite als auch die Oberseite des Windleitprofils sind konvex gewölbt. Dem Windleitprofil ist eine elektrooptisch arbeitende Vorrichtung oder eine mechanisch arbeitende Vorrichtung zugeordnet, mit welcher der Anstellwinkel des Windleitprofils in Abhängigkeit von der Größe der relativen Einfederung der Schleifleistenanordnung und dem Neigungswinkel einer die Schleifleistenanordnung tragenden Haltevorrichtung einstellbar ist. Dieser bekannte Stromabnehmer besitzt einen relativ komplexen Aufbau, der zu entsprechend hohen Herstellungskosten führt.

Der vorliegenden Erfindung liegt die Aufgabe zugrunde, bei einem Stromabnehmer gemäß dem Oberbegriff des Anspruchs 1 Maßnahmen zu treffen, durch die in beiden Fahrtrichtungen Abtrieb erzeugt wird bei möglichst geringem Luftwiderstand. Zudem soll das dabei zum Einsatz kommende Windleitprofil kostengünstig herstellbar sein.

Diese Aufgabe wird erfindungsgemäß gelöst durch einen gattungsgemäßen Stromabnehmer mit den im kennzeichnenden Teil des Anspruchs 1 angegebenen Merkmalen. Dadurch, dass das Windleitprofil bei im wesentlichen konstanter Profildicke eine konvex ausgebildete Unterseite aufweist, umströmt der Fahrwind in beiden Fahrtrichtungen die Unterseite schneller als die Oberseite. Dementsprechend wird die Unterseite des Windleitprofils aufgrund der Gesamtdruckerhaltung längs einer Strömungslinie mit einem geringeren Druck beaufschlagt als die Oberseite. Dadurch werden aerodynamische Abtriebskräfte in beiden Fahrtrichtungen erzeugt. Die Größe des in der jeweiligen Fahrtrichtung erzeugten Abtriebes kann dabei durch die Geometrie und die Abmessungen des Windleitprofils sowie durch dessen Stellung am Stromabnehmer vorgegeben werden. Je nach Vorgabe können Vollprofile in symmetrischer oder asymmetrischer Ausgestaltung eingesetzt werden.

Erfindungsgemäß weist das Windleitprofil eine im wesentlichen konstante Profildicke auf. Dadurch kann das Windleitprofil in kostengünstiger Weise aus einem als Halbzeug verfügbaren Blech hergestellt werden, wobei die konvexe Unterseite durch Biegen des Bleches an bereits bekannten Biegevorrichtungen herstellbar ist. Der Fahrwind umströmt dabei die Oberseite des Windleitprofils langsamer als die Unterseite, da der Fahrwind über die Oberseite im wesentlichen geradlinig längs der Profilsehne strömt, während der Fahrwind durch die gewölbte Unterseite beschleunigt wird, Durch die konkave Ausbildung der Oberseite wird außerdem bei einem Windleitprofil konstanter Profildicke Material und damit Gewicht gespart im Vergleich zu einem sich strömungstechnisch ähnlich verhaltenden, aber auf der Oberseite mit der Profilsehne abschließenden Vollprofil variierender Dicke.

In einer vorteilhaften Ausführungsform der Erfindung ist das Windleitprofil kreisbogenförmig ausgebildet. Durch die Wahl einer definierten kreisbogenförmigen Krümmung des Windleitprofils können einerseits standartisierte Biegevorrichtungen eingesetzt werden und andererseits der zu erzielende Abtrieb in definierter Weise durch den Krümmungsradius eingestellt werden. Dabei gilt, daß der Abtrieb mit abnehmendem Krümmungsradius wächst.

In einer weiteren vorteilhaften Ausgestaltung der Erfindung ist das Windleitprofil in Fahrtrichtung angestellt. Durch diese Maßnahme erreicht man in entgegengesetzte Fahrtrichtungen unterschiedlich große Abtriebskräfte. Dies ist besonders vorteilhaft bei Stromabnehmern, deren Gestell asymmetrisch ausgebildet ist und deswegen von der Fahrtrichtung abhängige, unterschiedlich große Auftriebskräfte erfährt. Um diesem besonders bei hohen Fahrgeschwindigkeiten gewichtigen Effekt entgegenzuwirken, kann das erfindungsgemäße Windleitprofil unter einem spitzen Anstellwinkel zur Fahrtrichtung am Stromabnehmer befestigt werden.

In einer weiteren vorteilhaften Ausführungsform der Erfindung sind an etwa in Fahrtrichtung verlaufenden Seitenkanten des Windleitprofils von der Unterseite nach unten ragende Randschenkel angeformt. Dadurch entsteht ein in Fahrtrichtung gesehen auf den Kopf gestellter U-förmiger Querschnitt des Windleitprofils, der den Druckausgleich zwischen Ober- und Unterseite des Windleitprofils hemmt. Damit läßt sich ein gleich großer Abtrieb bei geringerer Spannweite des Windleitprofils erzielen, was zu einer geringeren Baugröße des Windleitprofils und zu einem geringeren Gewicht führt.

Vorteilhafterweise sind wenigstens an etwa quer zur Fahrtrichtung verlaufenden Stirnkanten des Windleitprofils Rundungen angeformt. Hierdurch wird der Strömungswiderstand des Windleitprofils verringert, die maximale Abtriebskraft bei zunehmendem Anstellwinkel vergrößert und der Strömungslärm reduziert. Die Geräuschentwicklung durch das Windleitprofil kann noch weiter verringert werden, indem auch andere Kanten abgerundet werden.

In einer weiteren bevorzugten Ausgestaltung der Erfindung ist das Windleitprofil einstückig aus einem leichten, steifen Werkstoff gebildet. Durch eine einstückige Ausbildung erzielt man eine hohe Festigkeit und damit auch eine hohe Lebensdauer eines erfindungsgemäßen Windleitprofils. Durch die Verwendung eines steifen Werkstoffes erreicht man eine gute Formbeständigkeit des Windleitprofils und dadurch eine sichere Funktion der etwa in einem Vorversuch oder durch numerische Simulation bestimmten Abtriebswirkungen des Windleitprofils.

In einer weiteren bevorzugten Ausgestaltung der Erfindung weist das Gestell eine die Schleifstücke tragende Wippe mit zwei seitlich angeordneten Auflaufhörnern auf, an welchen symmetrisch je ein Windleitprofil befestigt ist. An den Auflaufhörnern sind die Windleitprofile einfach zu befestigen, werden störungsfrei angeströmt und können durch ihre Anordnung und Stellung relativ zur Querachse, um die die Wippe drehbar gelagert ist, ein ausgleichendes Gegenmoment zu einem durch den Reibkontakt zwischen Schleifstück und Fahrdraht hervorgerufen Kippmoment der Wippe entwickeln.

In einer anderen bevorzugten Ausgestaltung der Erfindung weist das Gestell eine die Schleifstücke tragende Wippe mit zwei seitlich angeordneten Wippen-Haltern auf, die durch eine in einem quer zur Fahrtrichtung verlaufenden Scheitelrohr drehbar gelagerte Querachse verbunden sind, wobei ein Windleitprofil direkt am Scheitelrohr oder je an einem der beiden Wippen-Halter befestigt ist. Diese alternative Anordnung wird bevorzugt, falls die Auflaufhörner keine Möglichkeit für die Anbringung der Windleitprofile bietet oder falls diese dort nicht störungsfrei angeströmt werden können.

Die Erfindung wird im folgenden anhand eines in den Zeichnungen veranschaulichten Ausführungsbeispiels näher beschrieben, in deren
- FIG.1: ein Stromabnehmer in Seitenansicht,
- FIG. 2: der Stromabnehmer aus FIG. 1 in Frontansicht,
- FIG. 3: ein Windleitprofil in Seitenansicht und
- FIG. 4: das Windleitprofil aus FIG. 3 längs der Schnittlinie A-A
dargestellt ist.

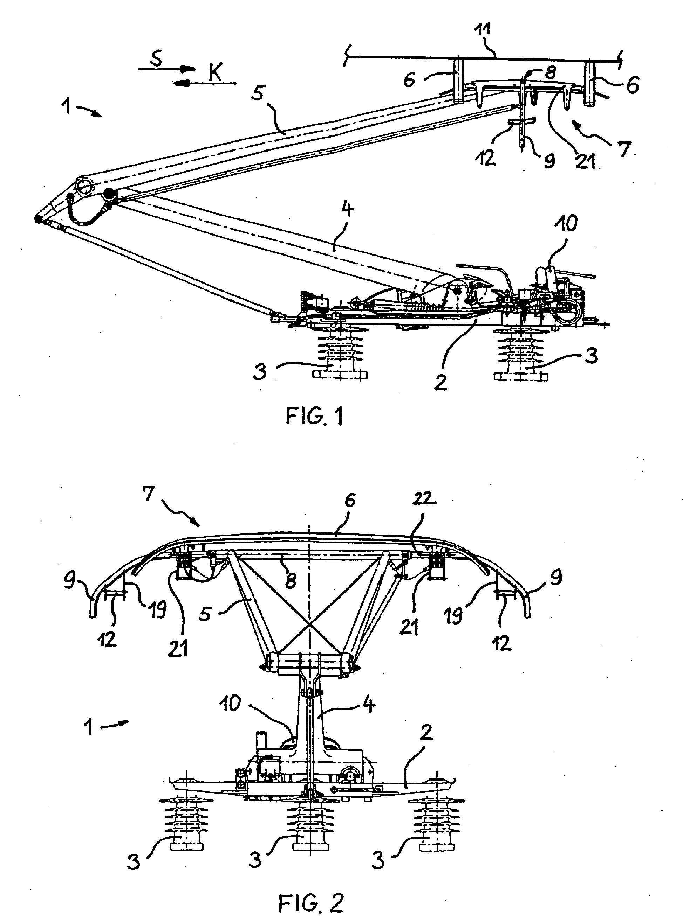

In FIG. 1 und 2 ist ein Stromabnehmer 1 für einen nicht dargestellten, elektrisch betriebenen Hochgeschwindigkeitszug dargestellt, der für Fahrgeschwindigkeiten von bis zu 350 km/h ausgelegt ist. Es handelt sich um einen Halbscheren-Stromabnehmer, dessen Grundrahmen 2 über Isolatoren 3 auf einem nicht dargestellten Dach des Zuges befestigt ist. Auf dem Grundrahmen 2 stützt sich ein federndes Gestell ab, das im wesentlichen einen Unterarm 4, einen Oberarm 5 und eine Schleifstücke 6 tragende Wippe 7 aufweist. Die Wippe 7 ist über Wippen-Halter 21 in einem mit dem Oberarm 5 verbundenen Scheitelrohr 8 um eine Querachse 22 drehbar gelagert, an deren seitlichen Enden nach unten gebogene Auflaufhörner 9 angeordnet sind. Der Stromabnehmer 1 ist durch einen Hubantrieb 10 von seiner unteren Senklage auf eine Arbeitshöhe verfahrbar. In seiner Arbeitshöhe muß für jede Fahrgeschwindigkeit gewährleistet sein, daß die Schleifstücke 6 mit einer mittleren Kontaktkraft von etwa 100 bis 150 N an einen Fahrdraht 11 der Oberleitung derart angepreßt werden, daß Kraftspitzen größer als 250 N und kleiner als 40 N praktisch nicht auftreten. Dadurch vermeidet man durch Kontaktunterbrechungen hervorgerufene Lichtbögen und erreicht einen für einen hinreichenden Stromfluß ausreichenden Anpreßdruck der Schleifstücke 6 an den Fahrdraht 11. Mit zunehmender Fahrgeschwindigkeit wächst jedoch der aerodynamische Auftrieb, den das Gestell des Stromabnehmers 1 im Fahrwind erfährt. Damit einhergehend steigt auch die Kontaktkraft zwischen den Schleifstücken 6 und dem Fahrdraht 11, was zu einem erhöhten Verschleiß der Schleifstücke 6 führt. Um diesem Effekt entgegen zu wirken, sind an den Auflaufhörnern 9 abtrieberzeugende Windleitprofile 12 angeordnet. Neben dem Abtrieb erzeugt der Luftwiderstand der Windleitprofile auch ein dem durch den Reibkontakt zwischen Schleifstücken 6 und Fahrdraht 11 hervorgerufenen Kippmoment der Wippe 7 ausgleichendes Gegenmoment. Zur Erzeugung eines symmetrischen Abtriebs sind die beiden Windleitprofile 12 in etwa gleichem Abstand zur Fahrzeuglängsmitte durch Befestigungsstege 19 an den Auflaufhörnern 9 unterhalb des Scheitelrohrs 8 gehalten.

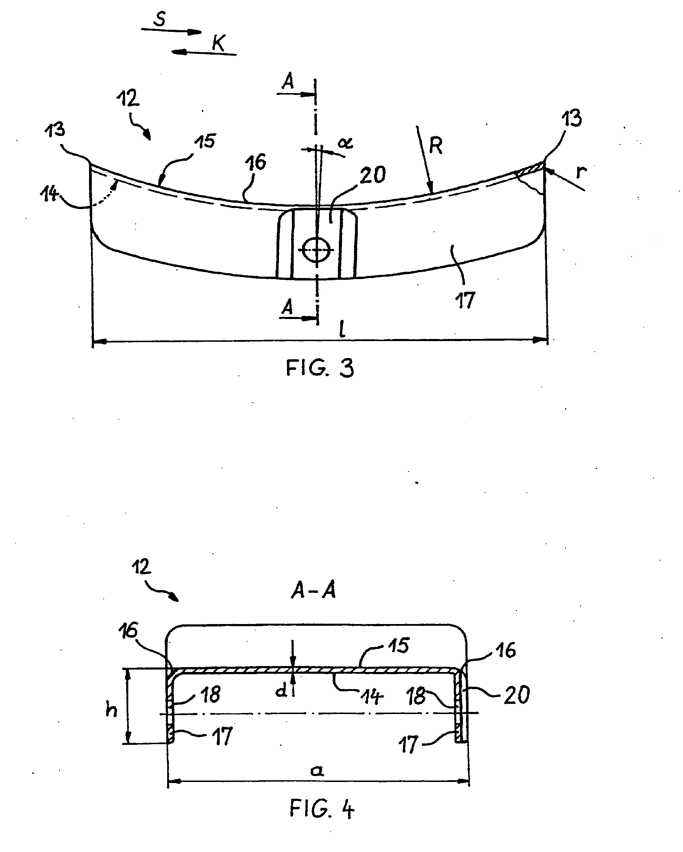

In den FIG. 3 und 4 ist ein erfindungsgemäßes Windleitprofil 12 dargestellt, wobei die Ansicht gemäß FIG. 3 der Seitenansicht des Windleitprofils 12 gemäß FIG. 1 entspricht und die Schnittansicht nach FIG. 4 der Frontansicht des in FIG. 2 am linken Auflaufhorn 9 angeordneten Windleitprofil 12 entspricht. Das Windleitprofil 12 weist eine mit Radius R kreisförmig gebogene Fläche konstanter Dicke d mit einer Profiltiefe I und einer Spannweite a auf. Als Maße für das für eine Höchstgeschwindigkeit von 330 km/h ausgelegte Windleitprofil 12 sind beispielsweise R = 160 mm, d = 1,5 mm, I = 120 mm und a = 80 mm gewählt. Das Windleitprofil 12 wird am Stromabnehmer 1 in einer etwa der in FIG. 3 gezeigten Stellung, also mit nach unten gewölbter Fläche, befestigt. Der durch eine der quer zur Fahrtrichtung S, K verlaufenden Stirnkanten 13 geteilte Fahrwind wird durch die konvexe Unterseite 14 der Fläche beschleunigt und umströmt diese schneller als die im wesentlichen geradlinig überströmte Oberseite 15. Ähnlich der Tragfläche eines Flugzeugs wird dadurch die schneller vom Fahrwind umströmte Unterseite 14 mit einem geringeren Druck beaufschlagt als die Oberseite 15 des Windleitprofils 12, was schließlich zu einer resultierenden Abtriebskraft führt. Entgegen der Tragfläche eines Flugzeuges wird jedoch bei dem erfindungsgemäßen Windleitprofil 12 Abtrieb in beiden entgegengesetzten Fahrtrichtungen S, K erzeugt. Dabei gilt, daß die Abtriebskraft steigt mit zunehmender Profiltiefe I, Spannweite a und Krümmung 1/R der Fläche des Windleitprofils 12. Zusätzlich wird die Abtriebskraft bei gegebener Fläche des Windleitprofils 12 erhöht, in dem an den beiden etwa in Fahrtrichtung S, K verlaufenden Seitenkanten 16 des Windleitprofils 12 nach unten ragende Randschenkel 17 der Höhe h angeformt sind. Die Randschenkel 17 behindern den Druckausgleich zwischen Unterseite 14 und Oberseite 15, so daß das Windleitprofil 12 bei gleicher Abtriebswirkung beispielsweise mit einer geringeren Spannweite a ausgebildet werden kann. In dem Ausführungsbeispiel beträgt die Höhe h der Randschenkel 17 beispielsweise 20 mm. Die Randschenkel 17 sind etwa mittig von fluchtenden Bohrungen 18 durchsetzt, über die das Windleitprofil 12 etwa mittels einer Schraubverbindung an Befestigungsstegen 19 festgesetzt ist, an welchen das Windleitprofil 12 am Stromabnehmer 1 gehalten wird. Zusätzlich ist wenigstens einer der beiden Randschenkel 17 mit einer Einprägung 20 für einen Befestigungssteg 19 versehen, die ein Verdrehen des Windleitprofils 12 relativ zum Befestigungssteg 19 verhindert. Im dargestellten Ausführungsbeispiel ist die Einprägung 20 um einen Winkel α von beispielsweise etwa 3° aus der Symmetrieebene herausgedreht. Bei vertikal angeordneten Befestigungsstegen 19 erzeugt dies einen Anstellwinkel α des Windleitprofils 12 in Fahrtrichtung S, K. Dadurch wird ein fahrtrichtungsabhängiger, unterschiedlich großer Abtrieb erreicht, der dem aufgrund der asymmetrischen Halbscherenform des unterschiedlich hohen Auftrieb des Stromabnehmers 1 Rechnung trägt. Durch die Anstellung des Windleitprofils 12 erhält man also sowohl im Kniegang K als auch im Spießgang S des Stromabnehmers 1 eine etwa gleich große Kontaktkraft zwischen den Schleifstücken 6 und dem Fahrdraht 11. Zur Reduzierung des aerodynamischen Lärms sind an den Stirnkanten 13 Rundungen mit einem Radius r von etwa 1 mm angeformt. Vorzugsweise sind auch die Kanten der Randschenkel 17 abgerundet. Im dargestellten Ausführungsbeispiel ist das Windleitprofil 12 einstückig als ein tiefgezogenes Aluminiumprofil ausgebildet. Dadurch weist das Windleitprofil 12 ein geringes Gewicht und, unterstützt durch den U-förmigen Querschnitt, eine hohe Steifigkeit auf. Alternativ kann das Windleitprofil 12 auch aus anderen Metallen, wie etwa Stahl, Titan, usw., oder aus Verbundwerkstoffen, wie etwa Kohle- oder Glasfaser-verstärktem Kunststoff, hergestellt werden.

## Patentansprüche

1. Stromabnehmer für ein elektrisch in zwei entgegengesetzte Fahrtrichtungen (S, K) betreibbares Fahrzeug, insbesondere Hochgeschwindigkeits-Fahrzeug, mit einem federnden Gestell zur Erzielung einer Kontaktkraft zwischen einem Schleifstück (6) des Stromabnehmers (1) und einem Fahrdraht (11) und mit wenigstens einem flächigen Windleitprofil (12) zur Beeinflussung der Kontaktkraft durch den Fahrwind, wobei das Windleitprofil eine konvex ausgebildete Unterseite (14) aufweist, **dadurch gekennzeichnet, dass** das Windleitprofil (12) in einer festen Stellung am Gestell befestigt ist und eine im wesentlichen konstante Profildicke (d) aufweist, wobei die Stellung des Windleitprofils (12) am Stromabnehmer vorgegeben werden kann.

2. Stromabnehmer nach Anspruch 1, **dadurch gekennzeichnet, dass** das Windleitprofil (12) kreisbogenförmig ausgebildet ist.

3. Stromabnehmer nach Anspruch 1 oder 2, **dadurch gekennzeichnet, dass** das Windleitprofil (12) in Fahrtrichtung (S, K) angestellt ist.

4. Stromabnehmer nach einem der Ansprüche 1 bis 3, **dadurch gekennzeichnet, dass** an etwa in Fahrtrichtung (S, K) verlaufenden Seitenkanten (16) des Windleitprofils (12) von der Unterseite (14) nach unten ragende Randschenkel (17) angeformt sind.

5. Stromabnehmer nach einem der Ansprüche 1 bis 4, **dadurch gekennzeichnet, dass** wenigstens an etwa quer zur Fahrtrichtung (S, K) verlaufenden Stirnkanten (13) des Windleitprofils (12) Rundungen angeformt sind.

6. Stromabnehmer nach einem der Ansprüche 1 bis 5, **dadurch gekennzeichnet, dass** das Windleitprofil (12) einstückig ausgebildet ist.

7. Stromabnehmer nach einem der Ansprüche 1 bis 6, **dadurch gekennzeichnet, dass** das Gestell eine Schleifstücke (6) tragende Wippe (7) mit zwei seitlich angeordneten Auflaufhörnern (9) aufweist, an welchen symmetrisch je ein Windleitprofil (12) befestigt ist.

8. Stromabnehmer nach einem der Ansprüche 1 bis 6, **dadurch gekennzeichnet, dass** das Gestell eine Schleifstücke (6) tragende Wippe (7) mit zwei seitlich angeordneten Wippen-Haltern (21) aufweist, die durch eine in einem quer zur Fahrtrichtung (S, K) verlaufenden Scheitelrohr (8) drehbar gelagerte Querachse (22) verbunden sind, wobei ein Windleitprofil (12) direkt am Scheitelrohr (8) oder je an einem der beiden Wippen-Halter (21) befestigt ist.

## Claims

1. Current collector for a vehicle which can be operated electrically in two opposite travel directions (S, K), in particular a high-speed vehicle having a sprung frame in order to bring about contact force between a contact slipper (6) of the current collector (1) and a contact wire (11) and having at least one flat wind-deflecting profile (12) for influencing the contact force due to the relative wind, wherein the wind-deflecting profile has an underside (14) which is embodied in a convex shape, **characterized in that** the wind-deflecting profile (12) is attached in a fixed position to the frame and has an essentially constant profile thickness (d), wherein the position of the wind-deflecting profile (12) on the current collector can be predefined.

2. Current collector according to Claim 1, **characterized in that** the wind-deflecting profile (12) is embodied in the shape of an arc of a circle.

3. Current collector according to Claim 1 or 2, **characterized in that** the wind-deflecting profile (12) has its angle of attack in the travel direction (S, K).

4. Current collector according to one of Claims 1 to 3, **characterized in that** edge limbs (17) which project downwards from the underside (14) are integrally formed onto side edges (16) of the wind-deflecting profile (12) which run approximately in the travel direction (S, K).

5. Current collector according to one of Claims 1 to 4, **characterized in that** rounded portions are integrally formed at least on end edges (13) of the wind-deflecting profile (12) which run approximately transversely with respect to the travel direction (S, K).

6. Current collector according to one of Claims 1 to 5, **characterized in that** the wind-deflecting profile (12) is embodied in one piece.

7. Current collector according to one of Claims 1 to 6, **characterized in that** the frame has a rocker (7) which bears contact slippers (6) and has two laterally arranged run-up horns (9), on each of which a wind-deflecting profile (12) is symmetrically attached.

8. Current collector according to one of Claims 1 to 6, **characterized in that** the frame has a rocker (7) which bears contact slippers (6) and has two laterally arranged rocker holders (21) which are connected by means of a transverse axle (22) which is rotatably mounted in a top tube (8) which runs transverse with respect to the travel direction (S, K), wherein a wind-deflecting profile (12) is connected directly to the top tube (8) or in each case to one of the two rocker holders (21).

## Revendications

1. Collecteur de courant pour un véhicule fonctionnant électriquement dans deux directions opposées (S, K), en particulier véhicule à vitesse élevée, comportant un châssis en suspension pour l'obtention d'une force de contact entre un frotteur de contact (6) du collecteur de courant (1) et un fil de marche (11) et comportant au moins un profil aérodynamique planaire (12) pour exercer une incidence de la force de contact sous l'effet du vent induit par la marche, dans lequel le profil aérodynamique présente un côté inférieur (14) de forme convexe,
**caractérisé en ce que**
le profil aérodynamique (12) est fixé sur le châssis, dans une position fixe, et présente une épaisseur de profil (d) sensiblement constante, dans lequel la position du profil aérodynamique (12) peut être préétablie sur le collecteur de courant.

2. Collecteur de courant selon la revendication 1, **caractérisé en ce que**
le profil aérodynamique (12) est configuré en arc de cercle.

3. Collecteur de courant selon la revendication 1 ou 2, **caractérisé en ce que**
le profil aérodynamique (12) est ajusté au sens de marche (S, K).

4. Collecteur de courant selon l'une des revendications 1 à 3, **caractérisé en ce que**
les bords latéraux (16) s'étendant dans le sens de marche (S, K) du profil aérodynamique (12) sont formés par les ailes marginales (17) du côté inférieur (14) faisant saillie vers le bas.

5. Collecteur de courant selon l'une des revendications 1 à 4, **caractérisé en ce que**
au moins sur les bords frontaux (13) du profil aérodynamique (12), bords frontaux qui s'étendent sensiblement transversalement au sens de marche (S, K), présentent des arrondis.

6. Collecteur de courant selon l'une des revendications 1 à 5, **caractérisé en ce que**
le profil aérodynamique (12) est configuré d'un seul tenant.

7. Collecteur de courant selon l'une des revendications 1 à 4, **caractérisé en ce que**
Le châssis présente un archet (7) porteur d'un frotteur de contact (6) avec deux cornes d'archet de pantographe (9) disposés latéralement, sur lesquels est respectivement fixé un profil aérodynamique (12) de façon symétrique.

8. Collecteur de courant selon l'une des revendications 1 à 6, **caractérisé en ce que**
le châssis présente un archet (7) portant un frotteur de contact (6) avec deux supports d'archet (21) disposés latéralement, qui sont raccordés par un axe transversal (22) logé de façon rotative transversalement par rapport à un tube apical (8) s'étendant transversalement au sens de marche (S, K), dans lequel un profil aérodynamique (12) est fixé directement sur le tube apical (8) ou, respectivement, sur l'un des deux supports d'archet (21).
